(19) Europäisches Patentamt / European Patent Office / Office européen des brevets

(11) **EP 4 368 580 A1**

(12) **EUROPEAN PATENT APPLICATION**

(43) Date of publication:
**15.05.2024 Bulletin 2024/20**

(51) International Patent Classification (IPC):
**C01G 53/00** (2006.01)    **H01M 4/00** (2006.01)

(21) Application number: **23197866.9**

(52) Cooperative Patent Classification (CPC):
**C01G 53/42; H01M 4/00**

(22) Date of filing: **18.09.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.11.2022 KR 20220148245**

(71) Applicant: **SK On Co., Ltd.**
**Seoul 03161 (KR)**

(72) Inventors:
• **KIM, Hong Ki**
  **34124 Daejeon (KR)**
• **KANG, Min Gu**
  **34124 Daejeon (KR)**
• **KIM, Seung Hyun**
  **34124 Daejeon (KR)**
• **DO, Young Hoon**
  **34124 Daejeon (KR)**
• **PARK, Young Uk**
  **34124 Daejeon (KR)**
• **LEE, Yoon Ji**
  **34124 Daejeon (KR)**
• **CHO, Yong Hyun**
  **34124 Daejeon (KR)**

(74) Representative: **Prüfer & Partner mbB**
**Patentanwälte · Rechtsanwälte**
**Sohnckestraße 12**
**81479 München (DE)**

(54) **CATHODE ACTIVE MATERIAL FOR LITHIUM SECONDARY BATTERY AND LITHIUM SECONDARY BATTERY INCLUDING THE SAME**

(57)    A cathode active material for a lithium secondary battery according to an embodiment includes lithium metal oxide particles containing lithium and nickel, and containing a small amount of cobalt or no cobalt. An average particle diameter, a modulus and a hardness of the lithium metal oxide particles are adjusted to satisfy a desired relation. A lithium secondary battery has improved high-temperature storage properties, structural stability and high power properties.

FIG. 2

**Description**

BACKGROUND

1. Field

The disclosure of this patent application relates to a cathode active material for a lithium secondary battery and a lithium secondary battery including the same.

2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as an eco-friendly power source of an electric automobile, a hybrid vehicle, etc.

Examples of the secondary battery includes, e.g., a lithium secondary battery, a nickel-cadmium battery, a nickel-hydrogen battery, etc. The lithium secondary battery is widely developed and applied due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape for accommodating the electrode assembly and the electrolyte.

A lithium metal oxide may be used as a cathode active material of the lithium secondary battery. As an application range of the lithium secondary battery is expanded, longer life-span, higher capacity and higher energy density are required. As a size of the lithium metal oxide increases, the cathode active material may have a high energy density, but capacity and power properties may be degraded.

SUMMARY

According to an aspect of the present disclosure, there is provided a cathode active material for a lithium secondary battery having improved structural stability and high temperature storage properties.

According to an aspect of the present invention, there is provided a lithium secondary battery having improved structural stability and high temperature storage properties.

A cathode active material for a lithium secondary battery includes lithium metal oxide particles that contain lithium, nickel and cobalt, wherein a cobalt content is 15 mol% or less among all metal elements excluding lithium in the lithium metal oxide particles, and Equation 1 is satisfied.

$$[\text{Equation 1}]$$

$$(E/H)/D_{50} > 1.3$$

In Equation 1, $D_{50}$ is an average particle size value at a point where a volume accumulation is 50% in a volumetric particle size distribution of the lithium metal oxide particles. E is a modulus value of the lithium metal oxide particles measured using a nano indentation tester. H is a hardness value of the lithium metal oxide particles measured using a nano indentation tester.

In some embodiments, $2.5 > (E/H)/D_{50} > 1.3$.

In some embodiments, the cobalt content of each of the lithium metal oxide particles may be greater than 2 mol%, and equal to or less than 15 mol% of all metal elements excluding lithium.

In some embodiments, a nickel content in each of the lithium metal oxide particles may be in a range from 50 mol% to 70 mol% of all metal elements excluding lithium.

In some embodiments, the cobalt content in each of the lithium metal oxide particles may be greater than 0 mol%, and less than or equal to 2 mol% of all metal elements excluding lithium.

In some embodiments, a nickel content in each of the lithium metal oxide particles may be in a range from 70 mol% to 98 mol% of all metal elements excluding lithium.

In some embodiments, an average particle diameter ($D_{50}$) of the lithium metal oxide particles may be in a range from 2.0 μm to 10.0 μm.

In some embodiments, the modulus (E) of the lithium metal oxide particles may be in a range from 30 GPa to 100 GPa.

In some embodiments, the hardness (H) of the lithium metal oxide particles may be in a range from 5.0 GPa to 20.0 GPa.

In some embodiments, the lithium metal oxide particles may further contain manganese.

In some embodiments, each of the lithium metal oxide particles may include a lithium metal oxide represented by Chemical Formula 1.

[Chemical Formula 1]     $Li_aNi_xCo_yM1_{1-x-y}O_{2+b}$

In Chemical Formula 1, $0.9 \le a \le 1.2$, $0.3 < x \le 0.94$, $0 < y \le 0.15$, $-0.2 \le b \le 0.2$, and M1 may include at least one of Mn, Al, Ti, Zr, Ba, Tb, Nb, Y, W, B and Sr.

A cathode active material for a lithium secondary battery includes lithium metal oxide particles that contain lithium and nickel, and contain no cobalt, wherein Equation 1 is satisfied.

$$[\text{Equation 1}]$$

$$(E/H)/D_{50} > 1.3$$

In Equation 1, $D_{50}$ is an average particle size value at a point where a volume accumulation is 50% in a volumetric particle size distribution of the lithium metal oxide particles. E is a modulus value of the lithium metal oxide particles measured using a nano indentation tester. H is a hardness value of the lithium metal oxide particles measured using a nano indentation tester.

In some embodiments, each of the lithium metal oxide particles may include a lithium metal oxide represented by Chemical Formula 2.

[Chemical Formula 2]     $Li_cNi_zM2_{1-z}O_{2+d}$

In Chemical Formula 2, $0.9 \le c \le 1.2$, $0.3 < z \le 0.94$, $-0.2 < d < 0.2$, and M2 may include at least one of Mn, Al, Ti, Zr, Ba, Tb, Nb, Y, W, B, and Sr.

A lithium secondary battery includes a cathode containing the cathode active material for a lithium secondary battery according to the above-described embodiments, and an anode facing the cathode.

A cathode active material for a lithium secondary battery according to embodiments of the present disclosure may include lithium metal oxide particles containing lithium and nickel. An average particle diameter, a modulus and a hardness of the lithium metal oxide particles may be adjusted to satisfy a desired equation. Structural stability and high-temperature storage properties of the cathode active material may be improved.

The lithium metal oxide particle may contain a small amount of cobalt in a total transition metal, or may contain no cobalt. Therefore, a high-quality cathode active material may be provided at a low cost. Additionally, a concentration of nickel may be relatively increased, so that energy density and power properties may be improved.

The average particle diameter, the modulus and the hardness of the lithium metal oxide particles may satisfy the desired equation, so that crack resistance, long-term stability and capacity retention may be improved even though the content or concentration of cobalt is low. Thus, a cathode active material having high capacity, high energy density and improved stability may be provided.

BRIEF DESCRIPTION OF THE DRAWINGS

FIG. 1 is a schematic plan view illustrating a lithium secondary battery in accordance with exemplary embodiments.
FIG. 2 is a schematic cross-sectional view illustrating a lithium secondary battery in accordance with exemplary embodiments.

DETAILED DESCRIPTION OF THE EMBODIMENTS

According to embodiments of the present disclosure, a cathode active material containing lithium metal oxide particles and a lithium secondary battery containing the same are provided.

The lithium secondary battery of the present disclosure may be widely applied in green technology fields such as an electric vehicle, a battery charging station, solar power generation wind power generation using other batteries, etc. The lithium secondary battery according to the present disclosure may be used for eco-friendly electric vehicles and hybrid vehicles to prevent a climate change by suppressing air pollution and greenhouse gas emissions. etc.

Hereinafter, embodiments of the present disclosure will be described in detail with reference to exemplary embodiments and the accompanying drawings. However, those skilled in the art will appreciate that such embodiments and drawings are provided to further understand the spirit of the present invention and do not limit subject matters to be protected as disclosed in the detailed description and appended claims.

A cathode active material for a lithium secondary battery (hereinafter, that may be abbreviated as a cathode active material) includes a plurality of a lithium metal oxide particle.

The lithium metal oxide particle contains nickel (Ni). For example, the lithium metal oxide particle may include a lithium-nickel-based oxide. The lithium metal oxide particle may contain nickel (Ni), so that power and capacity of the secondary battery may be improved.

In example embodiments, the lithium metal oxide particle may contain a small amount of cobalt or may not contain cobalt. Accordingly, a production cost of the cathode active material may be reduced, and a cathode of uniform and high quality can be manufactured. For example, cobalt is a limited resource due to a small reserves, and thus uniform and high-quality cathode active materials may not be easily obtained due to a high cost of cobalt.

Additionally, as a cobalt content decreases, a nickel content may be relatively increased so that energy density and power properties of the cathode active material may be further improved. The term "content" or "concentration" as used herein may refer to a molar ratio or a molar concentration in the lithium metal oxide particle.

However, when the cobalt content is lowered, a crystallization temperature of the cathode active material precursor may be increased, thereby lowering a crystallinity of the cathode active material. Additionally, if a calcination temperature is increased to enhance the crystallinity, a crystal structure may become unstable due to a phase transition caused by a substitution of lithium ions in a cathode active material precursor, and structural stability may also be degraded.

The cathode active material according to embodiments of the present disclosure satisfies Equation 1 below.

$$[\text{Equation 1}]$$

$$(E/H)/D_{50} > 1.3$$

In Equation 1, $D_{50}$ (average particle diameter) is a particle size value (dimensionless) at a point where a volume accumulation is 50% in a volumetric particle size distribution of the lithium metal oxide particles.

In Equation 1, E is a modulus value of the lithium metal oxide particles measured by a nano indentation test.

For example, the modulus of lithium metal oxide particles can be measured using a nano indentation tester for the lithium metal oxide particles under conditions of a maximum load of 10 mN and a load application rate of 1 mN/sec. E may be an arithmetic average of the modulus values measured for each lithium metal oxide particle.

In an embodiment, the modulus value of each lithium metal oxide particle can be calculated by measuring the modulus for each lithium metal oxide particle 20 times or more and calculating the arithmetic average of the obtained values.

In Equation 1, H is a hardness value of the lithium metal oxide particles measured using a nano indentation test.

For example, the hardness of lithium metal oxide particles can be measured using a nano indentation tester for the lithium metal oxide particles under conditions of a maximum load of 10 mN and an indentation depth of 1 $\mu$m or less. H may be an arithmetic average of the hardness values measured for each lithium metal oxide particle.

In an embodiment, the hardness value of each lithium metal oxide particle can be obtained by measuring the hardness of each lithium metal oxide particle 20 times or more and calculating the arithmetic average of the obtained values.

In some embodiments, E and H may be obtained by measure each of the modulus value and the hardness value for any of 10 or more, 50 or more, 100 or more, and 300 or more of the lithium metal oxide particles, and calculating the arithmetic average of the obtained values. As the number of measured particles increases, accuracy and reliability of the E and H values may be improved.

For example, when measuring E and H in the state of the cathode active material layer, 10, 50, 100, or 300 or more areas from a cross section of the cathode active material layer may be selected and the lithium metal oxide particles in the selected areas may be collected to measure the modulus value and hardness value of each region. E and H in the above Equation 1 can be calculated by arithmetic averaging the measured values.

The cathode active material satisfying the above Equation 1 may be used so that the crystal structure may be stabilized, and structural stability and mechanical properties may be improved. Thus, cracks of particles may be prevented even under harsh conditions of high temperature and repetitive charging and discharging operation, and capacity degradation and gas generation due to side reactions of the cathode active material particles may be suppressed.

For example, if the hardness and particle size become excessively large compared to the modulus of the lithium metal oxide particles, damages may occur in the crystal and structure due to a pressure or a heat applied to the particles. In this case, the crystallinity and structure of the particles may be changed or be destroyed during electrode fabrication process, operating environment and charge/discharge process, and side reactions with the electrolyte solution may be increased at exposed particle interfaces.

According to embodiments of the present disclosure, impact resistance, heat resistance and high-temperature storage properties of the cathode active material may be improved by adjusting the modulus, hardness and size of the lithium metal oxide particles within the range of the above Equation 1.

Thus, even though the lithium metal oxide particles have a low cobalt content, high temperature capacity retention and cycle properties may be improved, and an amount of gas generated by the side reactions may be reduced. Therefore, the high-quality cathode active material may be obtained with a low cost, and the nickel content may be relatively increased, thereby improving the capacity, power and charging performance of the secondary battery.

In some embodiments, in Equation 1, $2.5 > (E/H)/D_{50} > 1.3$, $2.0 \geq (E/H)/D_{50} \geq 1.4$, $2.0 \geq (E/H)/D_{50} \geq 1.5$ or $1.8 \geq (E/H)/D_{50} \geq 1.5$. Within the above range, the high temperature capacity retention of the cathode active material may be further improved, the side reactions may be further suppressed, and the amount of gas generation may b reduced.

In some embodiments, the modulus (E) of the lithium metal oxide particles may be in a range from 30 GPa to 100 GPa. For example, the modulus (E) of the lithium metal oxide particles may be in a range from 30 GPa to 95 GPa, from 35 GPa to 92 GPa, or from 35 GPa to 90 GPa.

Within the above range, an compressive strength of the lithium metal oxide particles may be increased. Thus, physical damages to the particles may be prevented during the cathode fabrication including, e.g., coating, drying and pressing processes. Additionally, physical and thermal shock applied to the particles during the charging and discharging process may be alleviated, and cycle and capacity properties may be improved.

In some embodiments, the hardness (H) of the lithium metal oxide particles may be in a range from 5.0 GPa to 20.0 GPa, e.g., from 5.0 GPa to 19.0 GPa, or from 6.0 GPa to 16.0 GPa.

The hardness of the lithium metal oxide particles may be decrease as a pressure applied to the lithium metal oxide particles decreases. For example, as the hardness becomes lower, a density of the lithium metal oxide particles and the charging properties may be lowered. For example, as the hardness increases, brittleness of the particles may be increased, which may degrade structural stability to cause cracks and defects in the particles.

In some embodiments, the average particle diameter ($D_{50}$) of the lithium metal oxide particles may be in a range from 2.0 $\mu$m to 10.0 $\mu$m. In an embodiment, the average particle diameter of the lithium metal oxide particles may be in a range from 2.5 $\mu$m to 8.0 $\mu$m, or from 3.0 $\mu$m to 7.0 $\mu$m.

For example, if the average particle diameter of the lithium metal oxide particles is 10.0 $\mu$m or less, mechanical properties and stability of the particles may be improved. For example, if the average particle diameter of the lithium metal oxide particles is 2.0 $\mu$m or more, the size of the particles may be adjusted to shorten a transfer distance of lithium ions, and the capacity and power properties of the cathode may be improved.

In example embodiments, the lithium metal oxide particles may include a small amount of cobalt. For example, the cobalt content or concentration of the lithium metal oxide particles may be 15 mol% or less of all metal elements excluding lithium.

The lithium metal oxide particles may contain cobalt (Co) to have a high lithium ion conductivity and a resistance within the particles may be reduced. Additionally, the crystallinity and structural stability of the lithium metal oxide particles may be improved by Co. Accordingly, the power and storage properties of the lithium secondary battery may be improved.

In some embodiments, the cobalt content of each of the lithium metal oxide particles may be greater than 2 mol%, and less than or equal to 15 mol% of all metal elements excluding lithium.

In an embodiment, when the cobalt content of each of the lithium metal oxide particles is greater than 2 mol% and 15 mol% or less, a nickel content of each of the lithium metal oxide particles may be in a range from from 50 mol% to 70 mol% of all metal elements excluding lithium.

Within the above composition range, the energy density and power properties of the cathode active material may be improved by the cobalt content and the high nickel content, and mechanical strength and electrochemical stability may be improved.

In some embodiments, the cobalt content of each of the lithium metal oxide particle may be greater than 0 mol%, and less than or equal to 2 mol% of all metal elements excluding lithium.

In an embodiment, if the cobalt content of each of the lithium metal oxide particle is greater than 0 mol% and 2 mol% or less, the nickel content of each of the lithium metal oxide particle may be in a range from 70 mol% to 98 mol% of all metal elements excluding lithium.

Within the above range, the capacity and density of the cathode active material may be increased by the high-content Ni, and mechanical strength and electrochemical stability may be improved.

As described above, the modulus, the hardness and the particle size of the lithium metal oxide particles may be adjusted to satisfy the above Equation 1, so that the cathode active material may have improved crystallinity and structural stability while having the low cobalt content.

Additionally, even though the nickel content of the lithium metal oxide particles is relatively high, deterioration of high temperature life-span properties and stability may be prevented. Therefore, improved cycle properties may be obtained while maintaining high capacity.

In some embodiments, the lithium metal oxide particles may have the form of a single particle, a secondary particle or a mixture thereof. The single particle and the secondary particle may be distinguished by a morphology of the particle. For example, the secondary particle and the single particle may be distinguished based on a cross-sectional image of the particle measured by a scanning electron microscope (SEM).

The secondary particle may refer to a particle that is substantially regarded or observed as one particle by an agglomeration of a plurality of primary particles. For example, in the case of the secondary particle, boundaries of the primary particles can be observed in the SEM cross-sectional image.

In an embodiment, the secondary particle may be an aggregate of more than 10, 30 or more, 50 or more, or 100 or more primary particles.

The single particle may refer to a particle (monolith) that is not an aggregate. For example, in the case of the single particle, boundaries of the primary particles may not be observed in the SEM cross-sectional image.

In an embodiment, the lithium metal oxide particles may have the structure of the single particle, mechanical properties and structural stability of the particles may be improved. Thus, side reactions of the cathode active material and cracks of particles, the amount of gas generation may be reduced, and the capacity properties may be improved.

In an embodiment, lithium metal oxide particles have the structure in which small-sized primary particles are aggregated. In this case, the energy density may be improved while reducing a transfer distance of lithium ions. For example, the lithium ions may be transferred through the boundaries between the primary particles, and the mobility of the lithium ions can be improved.

In some embodiments, the lithium metal oxide particles may further contain manganese (Mn). For example, the lithium metal oxide particles may include a nickel-cobalt-manganese (Ni-Co-Mn)-based oxide or a nickel-manganese (Ni-Mn)-based oxide.

In an embodiment, the lithium metal oxide particles may further contain another metal element such as Al, Ti, Zr, Ba, Tb, Nb, Y, W, B and Sr. The lithium metal oxide particle may further contain another metal element such as Al, mechanical and chemical stability, and heat resistance of the particles may be further improved. Therefore, cracks in the cathode active material may be suppressed even during repeated charge and discharge operation, and high temperature life-span properties of the secondary battery may be improved.

In some embodiments, each of the lithium metal oxide particles may include a lithium metal oxide represented by Chemical Formula 1 below.

$$[\text{Chemical Formula 1}] \qquad Li_aNi_xCo_yM1_{1-x-y}O_{2+b}$$

In Chemical Formula 1, $0.9 \leq a \leq 1.2$, $0.3 < x \leq 0.94$, $0 < y \leq 0.15$, $-0.2 \leq b \leq 0.2$, and M1 may include at least one selected from the group consisting of Mn, Al, Ti, Zr, Ba, Tb, Nb, Y, W, B and Sr.

The chemical structure represented by Chemical Formula 1 indicates a bonding relationship included in the layered structure or the crystal structure of the cathode active material, and is not intended to exclude another additional element. For example, Ni, Co and M1 may serve as main active elements of the cathode active material. Chemical Formula 1 is provided to express the bonding relationship of the main active elements, and is to be understood as a formula encompassing introduction and substitution of the additional element.

In an embodiment, an auxiliary element for enhancing chemical stability of the cathode active material or the layered structure/crystal structure may be further included in addition to the main active element. The auxiliary element may be incorporated into the layered structure/crystal structure to form a bond, and it is to be understood that this case is also included within the chemical structure represented by Chemical Formula 1.

The auxiliary element may include at least one of, e.g., Na, Mg, Ca, Hf, V, Nb, Ta, Cr, Mo, Fe, Cu, Ag, Zn, Ga, C, Si, Sn, Ra, P and S. The auxiliary element may act as an auxiliary active element which may contribute to capacity/power activity of the cathode active material together with Co, Mn or M1.

In example embodiments, the lithium metal oxide particle may not contain cobalt. For example, the lithium metal oxide particle may be a substantially cobalt-free metal oxide.

The cathode active material may satisfy the above Equation 1, so that the lithium metal oxide particle may have improved chemical and structural stability even though no cobalt is contained. Thus, collapse of the crystal structure of the cathode active material and cracks of the particles may be suppressed even after repeated charging and discharging, and high temperature and life-span properties of the lithium secondary battery may be improved.

In an embodiment, each of the lithium metal oxide particles may include a lithium metal oxide represented by Formula 2 below.

[Chemical Formula 2]  $Li_cNi_zM2_{1-z}O_{2+d}$

In Chemical Formula 2, $0.9 \leq c \leq 1.2$, $0.3 < z \leq 0.94$, $-0.2 < d < 0.2$, and M2 may include at least one selected from the group consisting of Mn, Al, Ti, Zr, Ba, Tb, Nb, Y, W, B and Sr.

The chemical structure represented by Chemical Formula 2 indicates a bonding relationship included in the layered structure or the crystal structure of the cathode active material, and is not intended to exclude another additional element. Chemical Formula 2 is provided to express the bonding relationship of the main active elements, and is to be understood as a formula encompassing introduction and substitution of the additional element. For example, the lithium metal oxide particle may further contain an auxiliary element as described in Chemical Formula 1 in addition to Ni and M2.

A transition metal precursor (e.g., a Ni-Co-Mn or Ni-Mn precursor) for preparing the lithium metal oxide may be prepared through a coprecipitation reaction.

The transition metal precursor may be prepared through a coprecipitation reaction of metal salts. The metal salts may include a nickel salt, a manganese salt and/or a cobalt salt.

Examples of the nickel salt include nickel sulfate, nickel hydroxide, nickel nitrate, nickel acetate and a hydrate thereof. Examples of the cobalt salt include cobalt sulfate, cobalt nitrate, cobalt carbonate and a hydrate thereof. Examples of the manganese salt include manganese sulfate, manganese acetate and a hydrate thereof.

The metal salts may be mixed with a precipitating agent and/or a chelating agent in a ratio that satisfies the content or concentration ratio of each metal described with reference to Chemical Formula 1 or Chemical Formula 2 to prepare an aqueous solution. A transition metal precursor can be prepared by co- precipitating the aqueous solution in a reactor.

The precipitating agent may include an alkaline compound such as sodium hydroxide (NaOH), sodium carbonate ($Na_2CO_3$), etc. The chelating agent may include, e.g., ammonium hydroxide ($NH_4OH$), aqueous ammonia, ammonium carbonate, etc.

A temperature of the co-precipitation reaction may be adjusted, e.g., in a range from about 30°C to 70°C. A reaction time may be adjusted in a range from about 6 to 48 hours.

For example, the transition metal precursor may be reacted with a lithium precursor to prepare the lithium metal oxide particle. The lithium precursor may include, e.g., lithium carbonate, lithium nitrate, lithium acetate, lithium oxide, lithium hydroxide, etc. These may be used alone or in a combination thereof.

A crystallinity of the lithium metal oxide particle may be increased by a heat treatment (firing). In an embodiment, a temperature of the heat treatment may be in a range from about 600°C to 1000°C.

In an embodiment, the heat treatment may include a first firing performed at a relatively high temperature and a second firing at a relatively low temperature. For example, the first firing may be performed, and then the second firing may be performed at a temperature less than a temperature at which the first firing is performed.

In an embodiment, lithium impurities or unreacted precursors may be removed through a washing process before the heat treatment. In an embodiment, the washing process may be omitted.

In an embodiment, the modulus (E), hardness (H), etc., of the lithium metal oxide particles may be adjusted by controlling the time and temperature of the co-precipitation reaction time, the heat treatment temperature, washing conditions, etc.

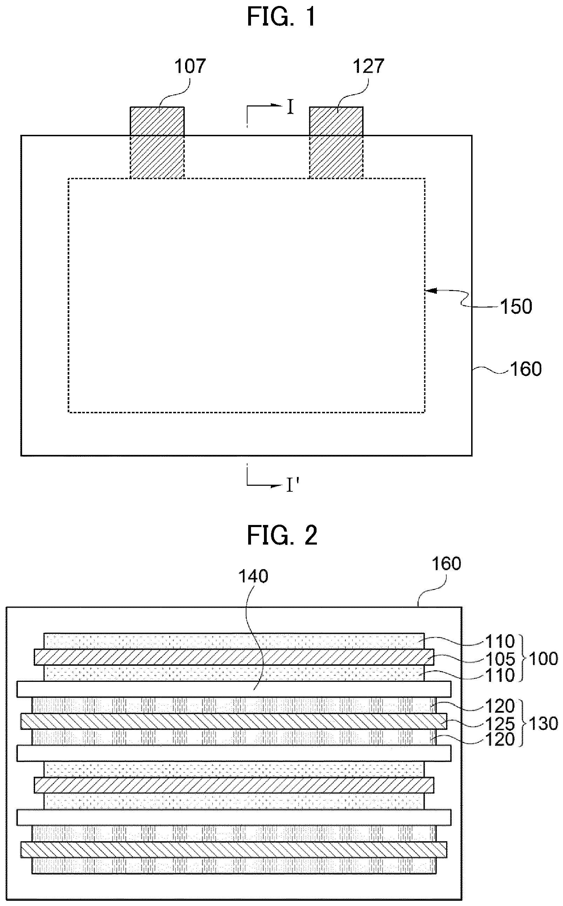

FIGS. 1 and 2 are a schematic plan view and a schematic cross-sectional view, respectively, illustrating a lithium secondary battery in accordance with example embodiments. For example, FIG. 2 is a cross-sectional view cut in the thickness direction along line I-I' of FIG. 1.

Constructions of the secondary battery are schematically illustrated in FIGS. 1 and 2 for convenience of descriptions, and the secondary battery of the present disclosure is not limited to the shape/structure illustrated in FIGS. 1 and 2.

Referring to FIGS. 1 and 2, the lithium secondary battery includes a cathode 100 and an anode 130 facing the cathode 100.

The cathode 100 may include a cathode current collector 105 and a cathode active material layer 110 formed on at least one surface of the cathode current collector 105. The cathode active material layer 110 includes the cathode active material including the above-described lithium metal oxide particle.

For example, a cathode slurry may be prepared by mixing and stirring the cathode active material with a binder, a conductive material and/or a dispersive agent in a solvent. The cathode slurry may be coated on at least one surface of the cathode current collector 105, and dried and pressed to form the cathode 100.

The cathode current collector 105 may include stainless steel, nickel, aluminum, titanium or an alloy thereof. The cathode current collector 105 may include aluminum or stainless steel surface-treated with carbon, nickel, titanium or silver.

The binder may include an organic based binder such as polyvinylidenefluoride (PVDF), a polyvinylidene fluoride-hexafluoropropylene copolymer (PVDF-co-HFP), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer 110 may be reduced, and an amount of the cathode active material may be relatively increased. Thus, capacity and power of the lithium secondary battery may be further improved.

The conductive material may be added to facilitate electron mobility between active material particles. For example, the conductive material may include a carbon-based material such as graphite, carbon black, graphene, carbon nanotube, etc., and/or a metal-based material such as tin, tin oxide, titanium oxide, a perovskite material such as $LaSrCoO_3$ or $LaSrMnO_3$, etc.

The anode 130 may include an anode current collector 125 and an anode active material layer 120 formed on at least one surface of the anode current collector 125. The anode active material layer 120 may include an anode active material.

The anode active material may include a material capable of adsorbing and ejecting lithium ions which may be widely used in the related art without a particular limitation. For example, a carbon-based material such as a crystalline carbon, an amorphous carbon, a carbon complex or a carbon fiber, a lithium alloy, silicon or tin may be used as the anode active material.

The amorphous carbon may include a hard carbon, cokes, a mesocarbon microbead (MCMB) fired at a temperature of 1500 °C or less, a mesophase pitch-based carbon fiber (MPCF), etc.

The crystalline carbon may include a graphite-based material such as natural graphite, artificial graphite, graphitized cokes, graphitized MCMB, graphitized MPCF, etc.

The lithium alloy may further include aluminum, zinc, bismuth, cadmium, antimony, silicon, lead, tin, gallium, indium, etc.

The anode current collector 125 may include, e.g., gold, stainless steel, nickel, aluminum, titanium, copper, or an alloy thereof. For example, the anode current collector 125 may include copper or a copper alloy.

In some embodiments, a slurry may be prepared by mixing and stirring the anode active material with a binder, a conductive material and/or a dispersive agent in a solvent. The slurry may be coated on the anode current collector, and then dried and pressed to form the anode 130.

The binder and the conductive material substantially the same as or similar to those mentioned above may be used in the anode 130. In some embodiments, the binder for forming the anode 130 may include an aqueous binder such as styrene-butadiene rubber (SBR) for a compatibility with, e.g., the carbon-based active material, and carboxymethyl cellulose (CMC) may also be used as a thickener.

A separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, etc. The separation layer 140 may also include a nonwoven fabric formed from a glass fiber with a high melting point, a polyethylene terephthalate fiber, etc.

In example embodiments, an electrode cell is defined by the cathode 100, the anode 130 and the separation layer 140, and a plurality of the electrode cells may be repeatedly arranged to form an electrode assembly 150. In some embodiments, the electrode assembly 150 may be fabricated as a winding type, a stacking type, a zigzag folding type, or a stack-folding type.

The electrode assembly 150 may be accommodated within a case 160 to define a lithium secondary battery.

In example embodiments, the electrode assembly 150 may be accommodated together with an electrolyte in a case 160. In example embodiments, a non-aqueous electrolyte may be used as the electrolyte.

The non-aqueous electrolyte may include a lithium salt and an organic solvent. The lithium salt may be represented by $Li^+X^-$, and an anion of the lithium salt $X^-$ may include, e.g., $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination of two or more therefrom.

In an embodiment, electrode tabs (a cathode tab and an anode tab) may protrude from the cathode current collector 105 and the anode current collector 125 included in each electrode cell to one side of the case 160. The electrode tabs may be welded together with the one side of the case 160 to be connected to an electrode lead (a cathode lead 107 and an anode lead 127) that may be extended or exposed to an outside of the case 160.

The lithium secondary battery may be manufactured in, e.g., a cylindrical shape using a can, a square shape, a pouch shape or a coin shape.

Hereinafter, preferred embodiments are proposed to more concretely describe the present invention.

Examples and Comparative Examples

(1) Preparing cathode active material

Example 1

$NiSO_4$, $CoSO_4$ and $MnSO_4$ were added to distilled water and mixed in a molar ratio of 65:12:23. Distilled water was used after removing internal dissolved oxygen by bubbling with $N_2$ for 24 hours.

Thereafter, the mixed solution was introduced into a reactor at 60°C, and $NH_4OH$ was added to the reactor and stirred at a constant speed to prepare a transition metal solution. NaOH was added into the reactor at a constant rate so that a molar ratio of the transition metal and NaOH in the transition metal solution was 1:2. A coprecipitation reaction proceeded to prepare a preliminary precursor. The preliminary precursor was heat-treated in an oven at 120°C for 10 hours to obtain metal hydroxide particles.

Lithium hydroxide and the metal hydroxide particles were added to a dry highspeed mixer and mixed uniformly for about 5 minutes to prepare a mixture. Lithium hydroxide was added so that the molar ratio of (Ni+Co+Mn) and Li was 1:1.01.

The mixture was placed in a firing furnace, heated to 970°C at a ramping rate of 2°C/min, and maintained at 970°C for 10 hours. During the firing, oxygen was continuously passed through the furnace at a flow rate of 10 mL/min. After the firing, natural cooling was performed to room temperature, and lithium metal oxide particles ($LiNi_{0.65}Co_{0.12}Mn_{0.23}O_2$) were obtained by pulverization and classification.

Example 2

Lithium metal oxide particles ($LiNi_{0.75}Co_{0.02}Mn_{0.23}O_2$) were prepared by the same method as that in Example 1, except that $NiSO_4$, $CoSO_4$ and $MnSO_4$ were mixed in a molar ratio of 75:2:23, and the firing temperature was maintained at 775°C.

Example 3

Lithium metal oxide particles ($LiNi_{0.75}Co_{0.02}Mn_{0.23}O_2$) were prepared by the same method as that in Example 2, except that the firing temperature was maintained at 790°C.

Example 4

Lithium metal oxide particles ($LiNi_{0.75}Co_{0.02}Mn_{0.23}O_2$) were prepared by the same method as that in Example 2, except that the firing temperature was maintained at 805°C.

Example 5

Lithium metal oxide particles ($LiNi_{0.75}Co_{0.02}Mn_{0.23}O_2$) were prepared by the same method as that in Example 2, except that the firing temperature was maintained at 820°C.

Example 6

Lithium metal oxide particles ($LiNi_{0.75}Co_{0.02}Mn_{0.23}O_2$) were prepared by the same method as that in Example 2, except that the firing temperature was maintained at 770°C.

Comparative Example 1

Lithium metal oxide particles ($LiNi_{0.5}Co_{0.2}Mn_{0.3}O_2$) were prepared by the same method as that in Example 6, except that $NiSO_4$, $CoSO_4$ and $MnSO_4$ were mixed in a molar ratio of 5:2:3, and the firing temperature was maintained at 930°C.

Comparative Example 2

Lithium metal oxide particles ($LiNi_{0.5}Co_{0.2}Mn_{0.3}O_2$) were prepared by the same method as that in Example 1, except that $NiSO_4$, $CoSO_4$ and $MnSO_4$ were mixed in a molar ratio of 5:2:3.

Comparative Example 3

Lithium metal oxide particles ($LiNi_{0.75}Co_{0.02}Mn_{0.23}O_2$) were prepared by the same method as that in Example 2, except that the firing maintenance time was adjusted to 7 hours.

Comparative Example 4

Lithium metal oxide particles ($LiNi_{0.75}Co_{0.02}Mn_{0.23}O_2$) were prepared by the same method as that in Example 6, except that the firing maintenance time was adjusted to 7 hours.

(2) Measurement of modulus (E) of cathode active material

A modulus of each particle was measured for 50 random particles among the cathode active materials prepared according to the above-described Examples and Comparative examples. The modulus (E) of the cathode active material was calculated as an arithmetic average of the measured values.
Specifically, the modulus of each particle was measured using a nano-indentation device (FISCHER, HM2000) under conditions of a maximum load of 10 mN and a load application rate of 1 mN/sec. The modulus (E) of the cathode active material was calculated by arithmetic averaging the modulus values of the 50 measured particles.

(3) Measurement of hardness (H) of cathode active material

A hardness of each particle was measured for the 50 particles selected when measuring the modulus, and the hardness (H) of the cathode active material was calculated as an arithmetic average of the measured values.
Specifically, the hardness of each particle was measured using a nano-indentation device (FISCHER, HM2000) under conditions of a maximum load of 10 mN and an indentation depth of 1 $\mu$m or less. The hardness (H) of the cathode active material was calculated by arithmetic averaging the hardness values of the 50 measured particles.

(4) Measurement of average particle diameter ($D_{50}$) of cathode active material

A volumetric particle size distribution of the cathode active material was measured using a laser diffraction method (Microtrac, MT 3000). $D_{50}$ of the cathode active material was calculated from a particle size at 50% of the volume particle size distribution.
The measurement results are shown in Table 1 below.

[Table 1]

| | molar ratio (Ni:Co:Mn) | particle shape | E (GPa) | H (GPa) | E/H | $D_{50}$ ($\mu$m) | (E/H)/$D_{50}$ (dimensionless) |
|---|---|---|---|---|---|---|---|
| Example 1 | 65:12:23 | single | 75.9 | 126 | 6.1 | 3.7 | 1.65 |
| Example 2 | 75:2:23 | single | 39.6 | 6.3 | 6.3 | 3.6 | 1.75 |
| Example 3 | 75:2:23 | single | 90.3 | 15.2 | 6.0 | 3.8 | 1.58 |
| Example 4 | 75:2:23 | single | 33.4 | 5.8 | 5.8 | 2.9 | 2.0 |
| Example 5 | 75:2:23 | single | 47.1 | 7.3 | 6.5 | 3.6 | 1.81 |
| Example 6 | 75:2:23 | secondary | 57.2 | 6 | 9.5 | 7 | 1.36 |
| Comparative Example 1 | 50:20:30 | secondary | 75.4 | 8.2 | 9.2 | 9.4 | 0.98 |
| Comparative Example 2 | 50:20:30 | single | 68.9 | 108 | 6.4 | 5.3 | 1.21 |
| Comparative Example 3 | 75:2:23 | single | 37.2 | 11.7 | 3.2 | 2.9 | 1.10 |
| Comparative Example 4 | 75:2:23 | secondary | 80.9 | 9.9 | 8.2 | 8.1 | 1.01 |

In the "particle shape" in Table 1, "single" refers to a single particle, and "secondary" refers to a secondary particle.

Experiment Example

(1) Fabrication of lithium secondary battery

A cathode slurry was prepared by mixing the lithium metal oxide as a cathode active material, carbon black as a conductive material and polyvinylidene fluoride (PVdF) as a binder in a weight ratio of 92:5:3.

The cathode slurry was uniformly coated on an area excluding a protrusion of an aluminum foil (thickness: 15 $\mu$m) having the protrusion (cathode tab) at one side thereof, and dried and pressed to form a cathode.

An anode slurry was prepared by mixing a mixture of artificial graphite and natural graphite (a weight ratio of 7:3) as an anode active material, styrene-butadiene rubber as a binder and carboxymethyl cellulose as a thickener in a weight ratio of 97:1:2.

The anode slurry was uniformly coated on an area excluding a protrusion of a copper foil (thickness: 15 $\mu$m) having the protrusion (anode tab) at one side thereof, and dried and pressed to form a cathode.

An electrode assembly was formed with a polyethylene separator (thickness: 20 $\mu$m) interposed between the anode and the cathode. Thereafter, cathode and anode leads were welded and connected to the cathode and anode tabs, respectively.

The electrode assembly was stored in a pouch (case) so that some areas of the anode lead and the cathode lead were exposed to an outside, and three sides except for an electrolyte injection side were sealed.

An electrolyte solution was injected, and then the electrolyte injection side was also sealed, and impregnation with the electrolyte solution for 12 hours was performed to achieve a secondary battery.

In a preparation of the electrolyte solution, a 1M LiPF6 solution (EC/EMC/DEC mixed solvent with a volume ratio of 25:30:45) was prepared, and then 1 wt% of FEC (fluoroethylene carbonate), 0.3 wt% of VC (vinylethylene carbonate), 1.0 wt% of $LiPO_2F_2$ (lithium difluorophosphate), 0.5 wt% of PS (1,3-propane sultone), and 0.5 wt% of PRS (prop-1-ene-1,3-sultone) were added based on a total weight of the electrolyte solution.

(2) Evaluation on high temperature storage property

The lithium secondary batteries of Examples and Comparative Examples were subjected to CC/CV charging (1.0C 4.2V, 0.1C CUT-OFF) and CC discharging (1.0C 3.0V CUT-OFF) twice at 25°C. A discharge capacity A1 was measured at the second cycle. The discharged lithium secondary battery was CC/CV charged (1.0C 4.2V, 0.1C CUT-OFF).

The charged lithium secondary battery was stored at 60°C for 4 weeks, left at room temperature for an additional 30 minutes, and a discharge capacity A2 was measured after a CC discharge (1.0C 3.0V CUT-OFF).

A high-temperature storage property (capacity retention after high-temperature storage) was calculated as follows.

$$\text{Capacity retention after high temperature storage (\%)} = A2/A1 \times 100 \ (\%)$$

(3) Evaluation on high temperature gas generation

The lithium secondary battery according to each of Examples and Comparative Examples was CC/CV charged (1.0C 4.2V, 0.1C CUT-OFF) at 25°C in SOC 100%, and then placed in a 60°C chamber and stored for 4 weeks. After the 4 weeks of storage, gas in the secondary battery was collected using a GC analysis jig and an amount of generated gas was measured.

Using an amount of gas generation of the lithium secondary battery according to Comparative Example 1 as a standard (B1), an amount of gas generation (B2) of the lithium secondary battery according to other Examples and Comparative Examples were evaluated as follows.

$$\text{High-temperature gas generation (\%)} = B2/B1 \times 100 \ (\%)$$

The evaluation results are shown in Table 2 below.

[Table 2]

| No. | capacity retention (%) | gas generation (%) |
|---|---|---|
| Example 1 | 99.5 | 75.3 |
| Example 2 | 97.0 | 69.1 |
| Example 3 | 95.8 | 69.3 |
| Example 4 | 97.7 | 56.9 |
| Example 5 | 95.6 | 84.7 |
| Example 6 | 93.5 | 89.3 |
| Comparative Example 1 | 89.4 | 100 |
| Comparative Example 2 | 90.5 | 76.3 |
| Comparative Example 3 | 86.2 | 117 |
| Comparative Example 4 | 83.9 | 124 |

Referring to Tables 1 and 2, in Examples where the modulus (E), hardness (H) and average particle diameter (D50) of the cathode active material satisfied the above-described Equation 1, the high-temperature storage properties were improved, and the amounts of gas generation were relatively reduced.

When the $(E/H)/D_{50}$ value of the cathode active material was greater than 1.3, high temperature stability was generally improved even though the composition and shape of the lithium metal oxide particles were different. In Examples 1 to 3 and Example 5, the $(E/H)/D_{50}$ value of the cathode active material was from 1.5 to 1.9, and the high temperature storage and suppression of the gas generation properties were further improved.

However, in Comparative Examples where the $(E/H)/D_{50}$ value of the cathode active material was 1.3 or less, the high temperature storage properties were deteriorated, and the amounts of gas generation were relatively increased.

For example, in Comparative Examples 1 and 2 where the cobalt content of the cathode active material was relatively high, but the $(E/H)/D_{50}$ value was 1.3 or less, and high temperature stability was reduced.

In Comparative Examples 3 and 4 where the cobalt content was low and the $(E/H)/D_{50}$ value was 1.3 or less, the capacity decreased rapidly after the high temperature storage, and a relatively large amount of gas was generated due to side reactions.

**Claims**

1. A cathode active material for a lithium secondary battery comprising lithium metal oxide particles that contain lithium, nickel and cobalt, wherein a cobalt content is 15 mol% or less among all metal elements excluding lithium in the lithium metal oxide particles, and Equation 1 is satisfied:

$$[\text{Equation 1}]$$

$$(E/H)/D_{50} > 1.3$$

wherein, in Equation 1, $D_{50}$ is an average particle size value at a point where a volume accumulation is 50% in a volumetric particle size distribution of the lithium metal oxide particles,
E is a modulus value of the lithium metal oxide particles measured using a nano indentation tester, and
H is a hardness value of the lithium metal oxide particles measured using a nano indentation tester.

2. The cathode active material for a lithium secondary battery according to claim 1, wherein $2.5 > (E/H)/D_{50} > 1.3$.

3. The cathode active material for a lithium secondary battery according to claim 1 or 2, wherein the cobalt content of each of the lithium metal oxide particles is greater than 2 mol%, and equal to or less than 15 mol% of all metal elements excluding lithium.

4. The cathode active material for a lithium secondary battery according to any one claim of claims 1 to 3, wherein a nickel content in each of the lithium metal oxide particles is in a range from 50 mol% to 70 mol% of all metal elements excluding lithium.

5. The cathode active material for a lithium secondary battery according to claim 1 or 2, wherein the cobalt content in each of the lithium metal oxide particles is greater than 0 mol%, and less than or equal to 2 mol% of all metal elements excluding lithium.

6. The cathode active material for a lithium secondary battery according to claim 1, 2 or 5, wherein a nickel content in each of the lithium metal oxide particles is in a range from 70 mol% to 98 mol% of all metal elements excluding lithium.

7. The cathode active material for a lithium secondary battery according to any one of claims 1 to 6, wherein an average particle diameter ($D_{50}$) of the lithium metal oxide particles is in a range from 2.0 $\mu$m to 10.0 $\mu$m.

8. The cathode active material for a lithium secondary battery according to any one of claims 1 to 7, wherein the modulus (E) of the lithium metal oxide particles is in a range from 30 GPa to 100 GPa.

9. The cathode active material for a lithium secondary battery according to any one of claims 1 to 8, wherein the hardness (H) of the lithium metal oxide particles is in a range from 5.0 GPa to 20.0 GPa.

10. The cathode active material for a lithium secondary battery according to any one of claims 1 to 9, wherein the lithium metal oxide particles further contain manganese.

11. The cathode active material for a lithium secondary battery according to any one of claims 1 to 10, wherein each of the lithium metal oxide particles includes a lithium metal oxide represented by Chemical Formula 1:

[Chemical Formula 1] $\quad Li_aNi_xCo_yM1_{1-x-y}O_{2+b}$

wherein, in Chemical Formula 1, $0.9 \leq a \leq 1.2$, $0.3 < x \leq 0.94$, $0 < y \leq 0.15$, $-0.2 \leq b \leq 0.2$, and M1 includes at least one of Mn, Al, Ti, Zr, Ba, Tb, Nb, Y, W, B and Sr.

12. A cathode active material for a lithium secondary battery comprising lithium metal oxide particles that contain lithium and nickel, and contain no cobalt, wherein Equation 1 is satisfied:

$$[\text{Equation 1}]$$

$$(E/H)/D_{50} > 1.3$$

wherein, in Equation 1, $D_{50}$ is an average particle size value at a point where a volume accumulation is 50% in a volumetric particle size distribution of the lithium metal oxide particles,
E is a modulus value of the lithium metal oxide particles measured using a nano indentation tester, and
H is a hardness value of the lithium metal oxide particles measured using a nano indentation tester.

13. The cathode active material for a lithium secondary battery according to claim 12, wherein each of the lithium metal oxide particles includes a lithium metal oxide represented by Chemical Formula 2:

[Chemical Formula 2] $\quad Li_cNi_zM2_{1-z}O_{2+d}$

wherein, in Chemical Formula 2, $0.9 \leq c \leq 1.2$, $0.3 < z \leq 0.94$, $-0.2 < d < 0.2$, and M2 includes at least one of Mn, Al, Ti, Zr, Ba, Tb, Nb, Y, W, B, and Sr.

14. A lithium secondary battery, comprising:

a cathode containing the cathode active material for a lithium secondary battery according to any one of claims 1 to 13; and
an anode facing the cathode.

# FIG. 1

# FIG. 2

Europäisches
Patentamt

European
Patent Office

Office européen
des brevets

**EUROPEAN SEARCH REPORT**

Application Number

**EP 23 19 7866**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/052338 A1 (LI QIFENG [CN] ET AL) 17 February 2022 (2022-02-17) * paragraphs [0003], [0050]; example 1 * ----- | 1-11,14 | INV. C01G53/00 H01M4/00 |
| X | CN 115 072 802 A (BEIJING EASPRING MAT TECH CO LTD) 20 September 2022 (2022-09-20) * examples * ----- | 12-14 | |

TECHNICAL FIELDS
SEARCHED      (IPC)

C01G
H01M

The present search report has been drawn up for all claims

| Place of search | Date of completion of the search | Examiner |
|---|---|---|
| Munich | 6 March 2024 | Doslik, Natasa |

EPO FORM 1503 03.82 (P04C01)

## ANNEX TO THE EUROPEAN SEARCH REPORT
## ON EUROPEAN PATENT APPLICATION NO.

EP 23 19 7866

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2024

| Patent document cited in search report | | Publication date | Patent family member(s) | | Publication date |
|---|---|---|---|---|---|
| US 2022052338 | A1 | 17-02-2022 | CN | 110518232 A | 29-11-2019 |
| | | | CN | 112436134 A | 02-03-2021 |
| | | | EP | 3951946 A1 | 09-02-2022 |
| | | | EP | 4148830 A2 | 15-03-2023 |
| | | | ES | 2934943 T3 | 28-02-2023 |
| | | | US | 2022052338 A1 | 17-02-2022 |
| | | | US | 2023246184 A1 | 03-08-2023 |
| | | | WO | 2020220662 A1 | 05-11-2020 |
| CN 115072802 | A | 20-09-2022 | CN | 115072802 A | 20-09-2022 |
| | | | EP | 4345066 A1 | 03-04-2024 |
| | | | KR | 20240005205 A | 11-01-2024 |
| | | | WO | 2023193826 A1 | 12-10-2023 |

EPO FORM P0459

For more details about this annex : see Official Journal of the European Patent Office, No. 12/82